# EUROPÄISCHE PATENTANMELDUNG

(11) **EP 0 913 303 A2**
(43) Veröffentlichungstag der Anmeldung: **06.05.1999**
(21) Anmeldenummer: 98119019.2
(22) Anmeldetag: 08.10.1998
(51) Int. Cl.: B60T 1/06, F16D 51/00

(54) **Baugruppe für Räder eines Kraftfahrzeuges**

(30) Priorität: 10.10.1997 DE 19744946
(71) Anmelder: Continental Teves AG & Co. oHG, 60488 Frankfurt (DE)
(72) Erfinder: Döll, Andreas, 60439 Frankfurt (DE); Schorn, Michael, 65520 Bad Camberg (DE); Kautenburger, Michael, 61352 Bad Homburg (DE); Rettig, Marc-Oliver, 50733 Köln (DE)

(57) **Zusammenfassung**

Vorgeschlagen wird eine Baugruppe für nicht angetriebene und nicht lenkbare Räder eines Kraftfahrzeuges oder dergleichen mit einer Bremstrommel (14), einer Radnabe (9), einem Wälzlager (8, 10), einem Achszapfen (5) und einer Montagebasis (1) für die fahrzeugseitigen Bauteile einer Trommelbremse einschließlich Bremsbacken (3) und zugehörigen Befestigungsmitteln sowie Bremszylinder (6), Bremskolben und Verbindungsteilen zu den Bremsbacken (3).

Eine Baugruppe dieser Art ist erfindungsgemäß dadurch gekennzeichnet, daß die Montagebasis gieß- oder schmiedetechnisch als Trägerplatte (1) mit einem einstückig angeformten Anschlag (2) zur Abstützung der Bremsbacken (3) in Umfangsrichtung ausgebildet ist und daß ein gesondertes, dünnwandiges Schmutzblech (4) vorgesehen ist.

Anders als bei den bisher üblichen Baugruppen, bei denen die Montagebasis aus einem Blechabschnitt hergestellt ist, können bei der erfindungsgemäßen Baugruppe die örtlichen Belastungen besser berücksichtigt und erhebliche Einsparungen hinsichtlich Gewicht und Bearbeitungsaufwand erzielt werden.

## Beschreibung

Die Erfindung betrifft eine Baugruppe für nicht angetriebene und nicht lenkbare Räder eines Kraftfahrzeuges oder dergleichen mit einer Bremstrommel, einer Radnabe, einem Wälzlager, einem Achszapfen und einer Montagebasis für die fahrzeugseitigen Bauteile einer Trommelbremse einschließlich Bremsbacken und zugehörigen- Befestigungsmitteln sowie Bremszylinder, Bremskolben und Verbindungsteilen zu den Bremsbacken.

Bei derartigen Baugruppen wird als Montagebasis für die fahrzeugseitigen Bauteile einer Trommelbremse vielfach ein durch Stanz- und Umformoperationen, wie Tiefziehen, hergestellter Blechabschnitt verwendet, der so ausgeformt ist, daß er außerdem die Funktion eines Schmutzbleches übernehmen kann. Bei einem derartigen Blechabschnitt muß ein besonderer Anschlag für die Abstützung der Bremsbacken in Umfangsrichtung vorgesehen werden, weil der Blechabschnitt selbst mangels ausreichender Dicke als Anschlag nicht geeignet ist. Zu diesem Zweck wird im Blechabschnitt eine domartige Ausbuchtung geformt, an die ein Anschlagteil angenietet werden kann. Dies ist nicht nur verhältnismäßig arbeitsaufwendig, sondern bedingt auch eine verhältnismäßig große Wanddicke des Blechabschnitts, weil hier erhebliche Kräfte abgefangen und an die fahrzeugseitige Achsvorrichtung übertragen werden müssen. Auf der anderen Seite weist die aus Blech hergestellte Montagebasis Bereiche auf, die wegen der überall gleichen Dicke des Ausgangsmaterials erheblich überdimensioniert und einer Gewichtsreduzierung nicht zugänglich sind. Eine aus Blech hergestellte Montagebasis für die fahrzeugseitigen Bauteile einer Trommelbremse kann demnach zwar zusätzlich Funktionen (Anschlag, Schmutzblech) übernehmen, sie weist aber hinsichtlich der Anpassung an die örtlichen Beanspruchungen und im Hinblick auf eine mögliche Gewichtsminderung erhebliche Nachteile auf.

Der Erfindung liegt die Aufgabe zugrunde, bei einer gattungsmäßigen Baugruppe die insbesondere bei der Montagebasis für die fahrzeugseitigen Bauteile vorhandenen Mängel zu beseitigen und eine Baugruppe vorzuschlagen, die insgesamt leichter und kostengünstiger herstellbar ist.

Diese Aufgabe wird erfindungsgemäß dadurch gelöst, daß die Montagebasis gieß- oder schmiedetechnisch als Trägerplatte mit einem einstückig angeformten Anschlag zur Abstützung der Bremsbacken in Umfangsrichtung ausgebildet ist und daß ein gesondertes, dünnwandiges Schmutzblech vorgesehen ist.

Es hat sich herausgestellt, daß derartige Trägerplatten wesentlich besser an die örtlich sehr unterschiedlichen Beanspruchungen anpassbar sind als Formteile aus Blech und daß es in vielen Fällen zweckmäßiger ist, als Schmutzblech ein gesondertes dünnwandiges Bauteil vorzusehen. Die aus Blech hergestellte Montagebasis muß zur sicheren Übertragung der Bremskräfte eine vollflächig tellerförmige Gestalt haben, während die erfindungsgemäße Montagebasis - ausgehend von einem Nabenbereich - mit einzelnen radial verlaufenden Stegen auskommt, so daß man bei gleichem Werkstoff (Stahl) trotz der örtlich wesentlich dickeren Wandbereiche insgesamt auf ein kleineres Gesamtgewicht kommt. Wird für die Trägerplatte eine Leichtmetallegierung verwendet, ergibt sich zwar insgesamt ein größeres Materialvolumen, das Gesamtgewicht kann aber auch hier kleiner gehalten werden, als bei einer herkömmlichen Montagebasis aus einem Blechabschnitt.

Vorteilhafte Ausgestaltungen des Erfindungsgedankens sind in den Unteransprüchen 2 bis 14 beschrieben. Weitere Einzelheiten werden anhand der in den Figuren 1 bis 6 dargestellten Ausführungsbeispielen näher erläutert. Es zeigen:
- Fig. 1: eine erste Ausführungsform der erfindungsgemäßen Baugruppe im Schnitt,
- Fig. 2: eine zweite Ausführungsform der erfindungsgemäßen Baugruppe im Schnitt,
- Fig. 3: eine dritte Ausführungsform im Schnitt,
- Fig. 4: eine vierte Ausführungsform im Halbschnitt,
- Fig. 5: eine fünfte Ausführungsform im Schnitt,
- Fig. 6: eine Einzelheit der Schmutzblechbefestigung im Schnitt.

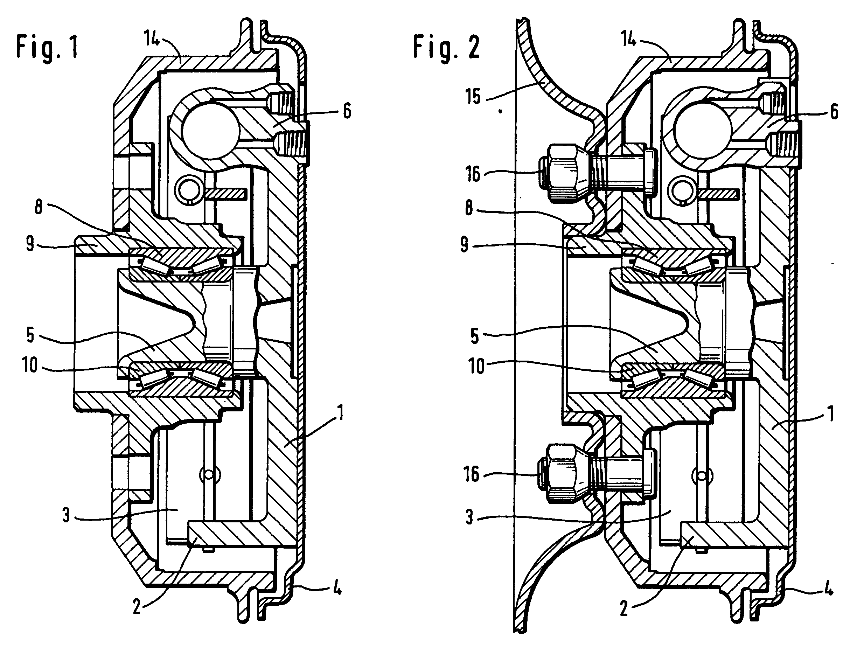

Bei der in Fig. 1 dargestellten Ausführungsform ist die Trägerplatte 1 einstückig mit einem Anschlag 2, einem Achszapfen 5 und einem Bremszylinder ausgebildet. Es versteht sich von selbst, daß bei dieser Ausführungsform erhebliche Gewichtsersparnisse zu erzielen sind, weil die für die Verbindung der genannten Bauteile bei herkömmlichen Baugruppen erforderlichen Verbindungsmittel eingespart werden. Hinzu kommt, daß aus mehreren Bauteilen zusammengesetzte Baugruppen in der Regel ohnehin ein höheres Gewicht aufweisen, weil für die Befestigungsbereiche insgesamt mehr Material erforderlich ist, als bei einstückigen Bauteilen. Von ganz erheblicher Bedeutung ist, daß die spangebende Bearbeitung zur Herstellung von Paßflächen für das Zusammenfügen mehrteiliger Baugruppen entfallen kann, so daß die erfindungsgemäße Montagebasis verglichen mit herkömmlichen Ausführungsformen wesentlich kostengünstiger herstellbar ist.

Das gesondert ausgeführte Schmutzblech 4 kann als sehr dünnes Blechbauteil ausgeführt werden, weil es keine Kräfte übertragen muß und bei der Montage einfach zwischen der Trägerplatte und der fahrzeugseitigen Achsvorrichtung eingeklemmt werden kann. An der Radnabe 9 ist in üblicher Weise eine Bremstrommel 14 befestigt. Der Außenring 8 eines Wälzlagers ist in die Radnabe 9 eingepreßt und durch Umlegen des inneren Randes der Radnabe 9 mittels Rollnieten axial festgelegt. Auf die gleiche Weise ist der Innenring 10 des Wälzlagers auf dem Achszapfen 5 befestigt.

Die Ausführungsform gemäß Fig. 2 unterscheidet sich von derjenigen gemäß Fig. 1 nur dadurch, daß ein gesonderter Bremszylinder 6 vorgesehen ist und daß zusätzlich ein Teil der Radfelge 15 und deren Verbindung mit der Radnabe durch Schraubbolzen 16 dargestellt ist. Im übrigen ist die Trägerplatte 1 mit einstückig angeformtem Anschlag 2 für die Abstützung der Bremsbacken 3 in Umfangsrichtung sowie mit dem einstückig angeformten Radzapfen 5 genauso ausgeführt wie bei dem Ausführungsbeispiel gemäß Fig. 1. Auch das Schmutzblech 4 ist unverändert beibehalten worden.

Die Ausführungsformen gemäß Figuren 1 und 2 eignen sich insbesondere für eine Herstellung aus Stahl, wobei die gesonderte Herstellung eines Bremszylinders fertigungstechnisch vorteilhaft sein kann und insbesondere eine flexiblere Anpassung an unterschiedliche Bremssysteme ermöglicht. Außerdem kann dann der Bremszylinder, wie vielfach üblich, aus einer Leichtmetallegierung hergestellt werden, wobei das dargestellte Profil preisgünstig im Strangpreßverfahren herstellbar ist.

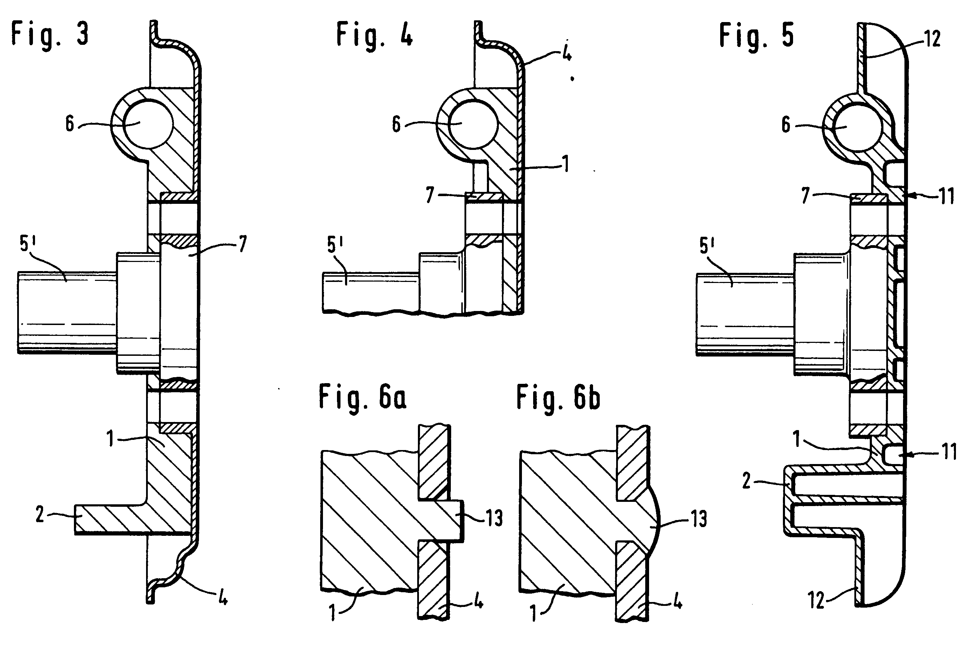

Die Ausführungsformen gemäß Figuren 3 bis 5 sind demgegenüber eher für eine Kombination eines Achszapfens 5' aus Stahl mit einer Trägerplatte 1 aus einer Leichtmetallegierung geeignet. Dabei können der Anschlag 2 und der Bremszylinder 6 vorzugsweise einstückig angeformt sein, während der Achszapfen 5' mit einem Flansch 7 ausgestattet ist, der in eine entsprechende Ausnehmung der Trägerplatte 1 innen oder außen eingefügt und mittels der gleichen Verbindungsmittel mit der Trägerplatte 1 verbunden werden kann, mit der die Baueinheit an der fahrzeugseitigen Achsvorrichtung befestigt wird. Das gesondert hergestellte dünne Schmutzblech 4 wird bei den Ausführungsformen der Figuren 3 und 4 dabei einfach mit eingeklemmt.

Bei der Ausführungsform gemäß Fig. 5 ist die Trägerplatte 1 in Leichtbauweise gieß- oder schmiedetechnisch mit einer Rippen- oder Wabenstruktur 11 sowie mit einem einstückig angeformten Schmutzring 12 ausgebildet. Es leuchtet ein, daß mit dieser Technik die Trägerplatte 1 festigkeitsmäßig optimal an die örtlich unterschiedlichen Beanspruchungen angepaßt werden kann und daß auf diese Weise ein Höchstmaß an Gewichtsersparnis erzielbar ist.

Für die Ausführungsformen gemäß Figuren 3 und 4 kann man erforderlichenfalls einstückig an der Trägerplatte 1 angeformte Nietzapfen 13 vorsehen, mittels derer das gesonderte Schmutzblech 4 befestigt werden kann.

Die Ausführungsbeispiele zeigen, daß man mit einer gieß- oder schmiedetechnisch hergestellten Trägerplatte wesentlich besser als mit einem Blechabschnitt auf die örtlichen Gegebenheiten eingehen kann und daß auf diese Weise zusätzlich Potential bei der Gewichtseinsparung und bei den Bearbeitungskosten ausgenutzt werden können.

## Patentansprüche

1. Baugruppe für nicht angetriebene und nicht lenkbare Räder eines Kraftfahrzeuges oder dergleichen mit einer Bremstrommel (14), einer Radnabe (9), einem Wälzlager (8, 10), einem Achszapfen (5) und einer Montagebasis (1) für die fahrzeugseitigen Bauteile einer Trommelbremse einschließlich Bremsbacken (3) und zugehörigen Befestigungsmitteln sowie Bremszylinder (6), Bremskolben und Verbindungsteilen zu den Bremsbacken (3), **dadurch gekennzeichnet,** daß die Montagebasis gieß- oder schmiedetechnisch als Trägerplatte (1) mit einem einstückig angeformten Anschlag (2) zur Abstützung der Bremsbacken (3) in Umfangsrichtung ausgebildet ist und daß ein gesondertes, dünnwandiges Schmutzblech (4) vorgesehen ist.

2. Baugruppe nach Anspruch 1, **dadurch gekennzeichnet,** daß die Trägerplatte (1) unter Weglassung nichttragender Teile und Dimensionierung der örtlichen Wanddicken unter Berücksichtigung von Sicherheitszuschlägen mit geringstmöglichem Materialaufwand hergestellt ist.

3. Baugruppe nach Anspruch 2, **dadurch gekennzeichnet,** daß die Trägerplatte (1) aus Stahl hergestellt ist.

4. Baugruppe nach Anspruch 3, **dadurch gekennzeichnet,** daß die Trägerplatte (1) mit einem einstückig angeformten Achszapfen (5) ausgebildet ist.

5. Baugruppe nach Anspruch 3 oder 4, **dadurch gekennzeichnet,** daß die Trägerplatte (1) mit einem einstückig angeformten Bremszylinder (6) ausgebildet ist.

6. Baugruppe nach Anspruch 1 oder 2**, dadurch gekennzeichnet,** daß die Trägerplatte (1) aus einer Leichtmetallegierung hergestellt ist.

7. Baugruppe nach Anspruch 6, **dadurch gekennzeichnet,** daß die Trägerplatte (1) mit einem einstückig angeformten Bremszylinder (6) ausgebildet ist.

8. Baugruppe nach Anspruch 6 oder 7, **dadurch gekennzeichnet,** daß die Trägerplatte (1) mit einem einstückig angeformten Achszapfen (5) ausgebildet ist.

9. Baugruppe nach Anspruch 6 oder 7, **dadurch gekennzeichnet,** daß ein gesonderter Achszapfen (5') aus Stahl vorgesehen ist, der mit einem Flansch (7) außen- oder innenseitig anliegend an der Trägerplatte (1) befestigt ist.

10. Baugruppe nach einem der Ansprüche 6 bis 9, **dadurch gekennzeichnet,** daß die Trägerplatte in Leichtbauweise mit einer Rippen- und/oder Wabenstruktur (11) hergestellt und daß anstelle eines gesonderten Schmutzblechs ein einstückig angeformter Schmutzring (12) vorgesehen ist.

11. Baugruppe nach einem der Ansprüche 1 bis 10, **dadurch gekennzeichnet,** daß ein Außenring (8) des Wälzlagers in die Radnabe (9) eingepaßt und durch Rollnieten axial fixiert ist.

12. Baugruppe nach einem der Ansprüche 1 bis 11, **dadurch gekennzeichnet,** daß ein Innenring (10) des Wälzlagers auf den Achszapfen (5) aufgeschoben und durch Rollnieten axial fixiert ist.

13. Baugruppe nach einem der Ansprüche 6 bis 9, **dadurch gekennzeichnet,** daß das gesonderte Schmutzblech (4) mittels einstückig an der Trägerplatte (1) angeformter Nietzapfen (13) befestigt ist.

14. Baugruppe nach einem der Ansprüche 1 bis 12, **dadurch gekennzeichnet,** daß die Trägerplatte (1) bei der Montage der Baueinheit mit der Fahrzeugachse verbindbar ist, wobei das Schmutzblech (4) zwischen der Trägerplatte (1) und einer stirnseitigen Anschlagfläche eingespannt wird.
